# EUROPEAN PATENT APPLICATION

(11) **EP 1 219 674 A1**
(43) Date of publication of application: **03.07.2002**
(21) Application number: 00830861.1
(22) Date of filing: 29.12.2000
(51) Int. Cl.: C08J 9/14, C08J 9/34

(54) **Process for making polyurethane integral skin foams**

(71) Applicant: HUNTSMAN INTERNATIONAL LLC, Salt Lake City, Utah 84108 (US)
(72) Inventor: Maggetti, Franco., 21020 Ternate (Varese) (IT); Moroni, Giancarlo., 21020 Ternate (Varese) (IT)
(74) Representative: Appoloni, Romano

(57) **Abstract**

Process for preparing polyurethane integral skin foams using a blowing agent mixture that contains or consists of 50 to 99 % by weight of 1,1,1,3,3-pentafluorobutane (HFC 365mfc) and 1 to 50 % by weight of at least one fluorinated hydrocarbon selected from the group consisting of 1,1,1,2-tetrafluoroethane (HFC 134a), 1,1,1,3,3-pentafluoropropane (HFC 245fa), 1,1,1,3,3,3-hexafluoropropane and 1,1,1,2,3,3,3-heptafluoropropane (HFC 227ea).

## Description

This invention relates to a process for the preparation of polyurethane molded articles having a dense periphery (skin) with a certain hardness and a cellular core (so-called integral skin foam) and to foams prepared thereby.

A class of materials which has been widely used as blowing agent in the production of polyurethane integral skin foams are the fully halogenated chlorofluorocarbons, and in particular trichlorofluoromethane (CFC-11). Recent concern over the potential of chlorofluorocarbons to cause depletion of ozone in the atmosphere has led to an urgent need to develop reaction systems in which chlorofluorocarbon blowing agents are replaced by alternative materials which are environmentally acceptable and which also produce integral skin foams having the necessary properties for the many applications in which they are used.

Such alternative blowing agents proposed in the prior art include hydrochlorofluorocarbons and hydrofluorocarbons.
In particular 1,1-dichloro-1-fluoroethane (HCFC 141b) has been used as blowing agent for polyurethane integral skin foams leading to foams with a densified skin with a high surface hardness. However HCFC 141b still contains chlorine atoms and hence is harmful to the environment.
1,1,1,2-tetrafluoroethane (HFC 134a) has been used to replace HCFC 141b as blowing agent in polyurethane integral skin foam but results in an inferior product due to the lower skin hardness.

DE 19836662 describes polyurethane integral skin foams made using hydrofluorocarbon blowing agents namely 1,1,1,3,3-pentafluoropropane (HFC 245fa) and/or 1,1,2,2-tetrafluoroethane (HFC 134). Skin hardness of foam obtained using these blowing agent is inferior to that of foam blown using HCFC 141b as blowing agent.

Object of the invention is the preparation of polyurethane integral skin foams having a high surface hardness using environmentally friendly blowing agents.

The present invention provides a process for making polyurethane molded articles having a dense periphery and a cellular core comprising the step of reacting an organic polyisocyanate composition with a polyfunctional isocyanate-reactive composition in the presence of hydrofluorocarbon blowing agents, characterised in that a blowing agent mixture is used that contains or consists of 50 to 99 % by weight of 1,1,1,3,3-pentafluorobutane (HFC 365mfc) and 1 to 50 % by weight of at least one fluorinated hydrocarbon selected from the group consisting of 1,1,1,2-tetrafluoroethane (HFC 134a), 1,1,1,3,3-pentafluoropropane (HFC 245fa), 1,1,1,3,3,3-hexafluoropropane and 1,1,1,2,3,3,3-heptafluoropropane (HFC 227ea).

Using these environmentally friendly blowing agent mixtures improves the quality of the skin of the integral skin foam in terms of increased density, hardness and abrasion resistance without adversely affecting other foam properties.

These mixtures have been described in WO 98/27145 for use as blowing agents for the manufacture of foamed plastics, in particular rigid insulating polyurethane foams and highly resilient polyurethane foams.

Preferred blowing agent mixtures for use in the present invention contain or consist of 80 to 99 % by weight of 1,1,1,3,3-pentafluorobutane and 1 to 20 % by weight of 1,1,1,2-tetrafluoroethane, 1,1,1,3,3,3-hexafluoropropane and/or 1,1,1,2,3,3,3-heptafluoropropane, especially mixtures which contain or consist of 80 to 99 % by weight of HFC 365mfc and 1 to 20 % by weight of HFC134a and/or HFC 227ea.
Especially preferred mixtures with HFC 134a contain or consist of 91 to 95 % by weight of HFC 365mfc and 5 to 9 % by weight of HFC 134a; mixtures which consist of the given compounds in the given amounts have a boiling point of 20°C.
Especially preferred mixtures with HFC 227ea are those, which contain or consist of 80 to 99 % by weight of HFC 365mfc and 1 to 20 % by weight of HFC 227ea and especially of 85 to 89 % by weight of HFC 365mfc and 11 to 15 % by weight of HFC 227ea; mixtures, which consist of the given compounds in the last-mentioned amounts, have a boiling point of about 23°C.

The blowing agent mixtures of the present invention are used in amounts of between 2 and 15 % by weight based on the weight of the isocyanate-reactive composition.
In semi-rigid integral skin foam the level of blowing agent mixture is preferably between 10 and 15 % by weight based on the weight of the isocyanate-reactive composition.
In rigid integral skin foam, particularly when used as imitation wood the level of blowing agent mixture is preferably between 2 and 10, most preferably between 4 and 8 % by weight based on the weight of the isocyanate-reactive composition. In addition to improved scratch and abrasion resistance, the use of foam systems containing the blowing agent mixture of the present invention also improves the surface quality by reducing the number of surface bubbles which can occur. The foamed part consequently requires less repairs to obtain the high quality visual appearance of the final coated imitation wood part.

Suitable organic polyisocyanates for use in the process of the present invention include any of those known in the art for the preparation of polyurethane integral skin foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Modified polyisocyanates, for example containing urethane-, urea-, biuret-, allophonate-, carbodiimide- or uretdion-groups can be used as well, or isocyanate-terminated prepolymers.

Suitable isocyanate-reactive compounds to be used in the process of the present invention include any of those known in the art for the preparation of polyurethane integral skin foams. Of particular importance for the preparation of semi-rigid polyurethane integral skin foams are polyols and polyol mixtures having average hydroxyl numbers of from 20 to 200, especially from 20 to 50 mg KOH/g, and hydroxyl functionalities of from 2 to 3. For polyether polyols the molecular weight is preferably between 2000 and 8000, for polyester polyols preferably between 2000 and 4000. Of particular importance for the preparation of rigid polyurethane integral skin foams are polyols, in particular polyether polyols, having average hydroxyl numbers between 300 and 1850, preferably between 350 and 650 mg KOH/g, and hydroxyl functionalities of from 2 to 6, preferably from 3 to 4. Mixtures of different polyols can be used; the mixing ratio depends on the application of the integral skin foam and the desired surface hardness of the skin.
Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example ethylene glycol, propylene glycol, glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids such as adipic acid, glutaric acid and phthalic acid. Still further suitable polymeric polyols include hydroxyl-terminated polythioethers, polyamides, polyesteramides, polycarbonates, polyacetals, polyolefins and polysiloxanes.

The quantities of the polyisocyanate compositions and the polyfunctional isocyanate-reactive compositions to be reacted will depend upon the nature of the polyurethane integral skin foam to be produced and will be readily determined by those skilled in the art.

Generally water or other carbon dioxide-evolving compounds are used together with the physical blowing agents mixture of the present invention. Where water is used as chemical co-blowing agent typical amounts are in the range from 0.2 to 5 %, preferably from 0.5 to 3 % by weight based on the isocyanate-reactive compound.

In addition to the polyisocyanate and polyfunctional isocyanate-reactive compositions and the blowing agents, the foam-forming reaction mixture will commonly contain one or more other auxiliaries or additives conventional to formulations for the production of polyurethane integral skin foams. Such optional additives include crosslinking agents, for examples low molecular weight polyols such as ethylene glycol, 1,4-butanediol, glycerol, trimethyolpropane and triethanolamine, urethane catalysts, for example tin compounds such as stannous octoate or dibutyltin dilaurate or tertiary amines such as 1,4-diaza-(2,2,2)-bicyclooctane, bis-(2-dimethylaminoethyl)ether, dimethylcyclohexylamine or triethylene diamine, surfactants, fire retardants, for example halogenated alkyl phosphates such as tris chloropropyl phosphate, and fillers such as carbon black.

In operating the process for making integral skin foams according to the invention, the known techniques may be used together with conventional mixing methods. Reference is made in this respect to EP 364854.

Densities of the integral skin foams of the present invention are usually within the range 300 to 600, preferably 400 to 500 kg/m³.

The obtained surface hardness in Shore D for rigid integral skin foams is for a density of about 500 kg/m³ in the range 65 to 70. For semi-rigid integral skin foams surface hardness Shore A of between 75 and 80 are obtained for a density of about 350 kg/m³.

The integral skin foams of the present invention can be used in all applications where integral skin foams of the prior art have been used, such as upholstery, shoe soles, imitation wood and steering wheel covers.

The various aspects of this invention are illustrated, but not limited by the following examples in which the following ingredients were used.
Polyol A which is a polyether polyol of OH value 28 mg KOH/g and functionality 3.
Polyol B which is a polyether polyol of OH value 35 mg KOH/g and functionality 3.
Polyol C which is a polyether polyol of OH value 380 mg KOH/g and functionality 4.
Polyol D which is a polyether polyol of OH value 420 mg KOH/g and functionality 4.
Polyol E which is a polyether polyol of OH value 800 mg KOH/g and functionality 4.
Polyol F which is a polymer polyol.
Polyol G which is polypropylene glycol of MW 1000.
Polyol H which is a coloring agent.
Polyol I which is a cell opening agent.
Polyol J which is glycerine.
Additive A which is monoethylene glycol.
Additive B which is diethyleneglycol.
Additive C which is a U.V. absorber.
Catalyst A which is dimethylcyclohexylamine.
Catalyst B which is dimethylbenzylamine.
Catalyst C which is an amine catalyst.
Catalyst D which is an amine catalyst.
Catalyst E which is an amine catalyst.
Surfactant A which is a surfactant.
Silicone A which is a silicone surfactant.
Silicone B which is a silicone surfactant.
Stabilizer A which is a stabilizer.
Solkane 365/227: a mixture of 93 wt% HFC 365mfc and 7 wt% HFC 227ea commercially available from Solvay.
Isocyanate A which is an MDI variant.
Isocyanate B which is an MDI prepolymer.
Isocyanate C which is an MDI variant.
Isocyanate D which is a polymeric MDI.

### EXAMPLE 1

Semi-rigid integral skin foams were made using the ingredients and the amounts as indicated in Table 1 below.
Foam properties were measured: skin hardness according to standard DIN 53505, elongation according to standard DIN 53571, tensile strength according to standard DIN 53571 and compression set according to standard DIN 53572. The results are also presented in Table 1.

The use of a blowing agent according to the invention (Foam No.4) is compared with the use of prior art blowing agents namely HCFC 141b (Foam No.1), water (Foam No.2) and HFC 134a (Foam No.3).
The use of a blowing agent mixture according to the invention namely Solkane 365/227 leads to a skin hardness which is even better than that obtained using HCFC 141b whereas the use of water or HFC 134a leads to decreased skin hardnesses.

**Table 1**

| | Units | Foam No. 1 | Foam No.2 | Foam No.3 | Foam No.4 |
|---|---|---|---|---|---|
| Polyol A | pbw | 76.34 | | 90.235 | 80 |
| Additive A | pbw | 5.73 | 7.87 | 8.550 | 7 |
| Additive B | pbw | 2.86 | 2.9 | | |
| Catalyst C | pbw | 0.76 | 0.48 | 0.99 | 0.8 |
| HCFC 141b | pbw | 14.31 | | | |
| Water | pbw | | 0.72 | | |
| Polyol B | pbw | | 56.7 | | |
| Polyol F | pbw | | 19.3 | | |
| Catalyst E | pbw | | 0.48 | | |
| Polyol J | pbw | | 0.48 | | |
| Silicone A | pbw | | 0.58 | | |
| Silicone B | pbw | | 1.29 | | |
| Polyol H | pbw | | 5.82 | | |
| Polyol I | pbw | | 2.92 | | |
| Additive C | pbw | | | 0.225 | |
| HFC 134a | pbw | | | 2.50 | |
| Solkane 365/227 | pbw | | | | 12.2 |
| Isocyanate A | pbw | 43 | | | |
| Isocyanate B | pbw | | 106 | | |
| Isocyanate C | pbw | | | 48 | 45 |
| Cream Time | sec | 22 | 11 | 16 | 20 |
| Gel Time | sec | 45 | 30 | 35 | 57 |
| End of Rise Time | sec | 55 | 41 | 58 | 62 |
| Free Rise Density | kg/m³ | 68 | 196 | 190 | 83 |
| Moulded Density | kg/m³ | 345 | 365 | 350 | 345 |
| Hardness | Shore A | 73 | 55 | 60 | 77 |
| Elongation | % | | | 95 | 100 |
| Tensile Strength | kPa | | | 1670 | 1850 |
| Compression Set | % | | | 12 | 12 |

### EXAMPLE 2

Rigid integral skin foams for use as imitation wood were made using the ingredients and the amounts as indicated in Table 2 below.
Foam properties were measured: H.D.T. (Heat Distortion Temperature) according to standard ISO 75, flexural modulus according to standard ISO 178, flexural strength according to standard ISO 178, impact charpy according to standard ISO 179 and surface hardness according to standard ISO 868. The results are also presented in Table 2.

The use of a blowing agent according to the invention (Foam No.8) is compared with the use of prior art blowing agents namely HCFC 141b (Foam No.5), water (Foam No.6) and HFC 134a (Foam No.7).
The use of a blowing agent mixture according to the invention namely Solkane 365/227 leads to a surface hardness which is even better than that obtained using HCFC 141b (without adversely affecting the other foam properties) whereas the use of water or HFC 134a leads to decreased skin hardnesses.

**Table 2**

| | Units | Foam No.5 | Foam No.6 | Foam No.7 | Foam No.8 |
|---|---|---|---|---|---|
| Polyol C | pbw | 61.98 | 57.5 | 72.30 | 61.98 |
| Polyol D | pbw | 26.47 | 30.00 | 16 | 26.47 |
| Surfactant A | pbw | 2 | | | 2 |
| Water | pbw | 0.51 | 0.60 | 0.60 | 0.51 |
| Catalyst A | pbw | 3.20 | 1.90 | 0.70 | 3.20 |
| Stabilizer A | pbw | 0.20 | | | |
| HCFC 141b | pbw | 3.74 | | | |
| Silicone A | pbw | 1.9 | 1.8 | 2 | 1.84 |
| Polyol E | pbw | | 2 | 2.40 | |
| Polyol G | pbw | | 5 | 2 | |
| Catalyst B | pbw | | 1.2 | 1 | |
| Catalyst D | pbw | | | 0.80 | |
| HFC 134a | pbw | | | 2.2 | |
| Solkane 365/227 | pbw | | | | 4.00 |
| Isocyanate D | pbw | 102 | 108 | 110 | 102 |
| | | | | | |
| Cream Time | sec | 23 | 24 | 28 | 22 |
| Gel Time | sec | 75 | 85 | 90 | 72 |
| Tack Free Time | sec | 100 | 110 | 120 | 95 |
| Free Rise Density | kg/m³ | 86 | 125 | 93 | 84 |
| Moulded Density | kg/m³ | 500 | 500 | 500 | 500 |
| H.D.T. | °C | 64 | 50 | 59 | 64 |
| Flexural Modulus | MPa | 780 | 757 | 670 | 785 |
| Flexural Strength | MPa | 25.7 | 20.9 | 22.2 | 25.5 |
| Impact Charpy | kJ/cm² | 10 | 13 | 10.22 | 9.8 |
| Surface hardness | Shore D | 65 | 58 | 62 | 68 |

## Claims

1. Process for making polyurethane molded articles having a dense periphery and a cellular core comprising the step of reacting an organic polyisocyanate composition with a polyfunctional isocyanate-reactive composition in the presence of hydrofluorocarbon blowing agents, **characterised in that** a blowing agent mixture is used that contains or consists of 50 to 99 % by weight of 1,1,1,3,3-pentafluorobutane (HFC 365mfc) and 1 to 50 % by weight of at least one fluorinated hydrocarbon selected from the group consisting of 1,1,1,2-tetrafluoroethane (HFC 134a), 1,1,1,3,3-pentafluoropropane (HFC 245fa), 1,1,1,3,3,3-hexafluoropropane and 1,1,1,2,3,3,3-heptafluoropropane (HFC 227ea).

2. Process according to claim 1 wherein the blowing agent mixture contains or consists of 80 to 99 % by weight of 1,1,1,3,3-pentafluorobutane and 1 to 20 % by weight of 1,1,1,2-tetrafluoroethane, 1,1,1,3,3,3-hexafluoropropane and/or 1,1,1,2,3,3,3-heptafluoropropane.

3. Process according to claim 2 wherein the blowing agent mixture contains or consists of 91 to 95 % by weight of HFC 365mfc and 5 to 9 % by weight of HFC 134a.

4. Process according to claim 2 wherein the blowing agent mixture contains or consists of 85 to 89 % by weight of HFC 365mfc and 11 to 15 % by weight of HFC 227ea.

5. Process according to claim 2 wherein the blowing agent mixture contains or consists of 91 to 95 % by weight of HFC 365mfc and 5 to 9 % by weight of HFC 227ea.

6. Process according to any one of the preceding claims wherein said blowing agent mixture is used in an amount of between 2 and 15 % by weight based on the polyfunctional isocyanate-reactive composition.

7. Polyurethane molded articles obtainable by the process as defined in any one of claims 1 to 6.

8. Polyurethane molded articles according to claim 7 having a density of between 300 and 600 kg/m³.

9. Polyurethane molded articles according to claim 8 having a density of between 400 and 500 kg/m³.

10. Use of polyurethane molded articles as defined in any one of claims 7 to 9 as imitation wood.
